# EUROPÄISCHE PATENTSCHRIFT

(11) **EP 1 245 982 B1**
(45) Veröffentlichungstag und Bekanntmachung des Hinweises auf die Patenterteilung: **30.11.2005**
(21) Anmeldenummer: 02005695.8
(22) Anmeldetag: 13.03.2002
(51) Int. Cl.: G02B 7/02

(54) **Vorrichtung zur Lagerung eines optischen Elementes in einer Optik**
Apparatus for holding an optical element in an optical device
Appareil pour monter un élément optique dans un appareillage optique

(30) Priorität: 30.03.2001 DE 10115914
(43) Veröffentlichungstag der Anmeldung: 02.10.2002
(73) Patentinhaber: Carl Zeiss SMT AG, 73447 Oberkochen (DE)
(72) Erfinder: Petasch, Thomas, 73431 Aalen (DE); Münker, Hartmut, 73431 Aalen (DE); Klein, Klaus-Dieter, 89551 Königsbronn (DE)
(74) Vertreter: Lorenz, Werner

(56) Entgegenhaltungen:
- EP-A- 0 964 281
- EP-A- 1 209 500
- CH-A- 371 906
- DE-A- 3 406 907
- DE-A- 19 910 947

## Beschreibung

Die Erfindung betrifft eine Vorrichtung zur Lagerung eines optischen Elementes in einer Optik, insbesondere eines Spiegels oder einer Linse, in einer Projektionsbelichtungsanlage, insbesondere einem Projektionsobjektiv in der Halbleiter-Lithographie.

Optische Elemente, wie z.B. Spiegel und Linsen, in der Optik, insbesondere in der Halbleiter-Lithographie, sollen isostatisch und somit deformationsentkoppelt gelagert sein, damit von außen einwirkende Störungen sich möglichst nicht auf das optische Element auswirken. Hierzu ist es bekannt, das optische Element entsprechend "weich" zu lagern. Das Problem bei einer weichen Lagerung besteht jedoch darin, dass man keine ausreichend hohen Eigenfrequenzen erreicht.

Die EP 1 209 500 A2 als älteres Recht beschreibt eine Vorrichtung zur Lagerung eines optischen Elements in einer Baugruppe. Die Vorrichtung weist wenigstens drei am Umfang des optischen Elements angeordnete Anbindungsstellen auf. Weiterhin weist die Vorrichtung Getriebeelemente auf, welche jeweils über eine radial liegende Biegefeder über einen Kopfpunkt an das optische Element angebunden ist. Die Getriebeelemente sind dabei so angeordnet bzw. dimensioniert, dass sie bei Störungseinwirkungen auf das optische Element einen Kompensationseffekt hinsichtlich der Deformation der optischen Oberfläche des optischen Elementes ergeben.

In der DE 199 10 947 A1 ist ebenfalls eine Vorrichtung zur Lagerung bzw. zum Verschieben eines optischen Elementes entlang der optischen Achse offenbart. Das optische Element ist in einem Haltering gelagert, an dem eine Verstelleinrichtung zum Verschieben des optischen Elementes entlang der optischen Achse angreift. Ein Stützring ist über Festkörpergelenke mit dem Haltering verbunden, wobei eine hohe Steifigkeit senkrecht zur optischen Achse erreicht wird. In axialer Richtung weisen die Festkörpergelenke eine ausreichende Weichheit auf. Mittels dieser Vorrichtung können insbesondere große und schwergewichtige optische Elemente sehr präzise in Richtung der optischen Achse verschoben werden, ohne Querbewegungen einzuführen.

Der vorliegenden Erfindung liegt daher die Aufgabe zugrunde, eine Vorrichtung zur Lagerung eines optischen Elementes zu schaffen, die einerseits wenig bzw. geringe Kräfte auf das optische Element ausübt, d.h. die sehr gut deformationsentkoppelt ist, wobei jedoch andererseits eine hohe Eigenfrequenz erreicht wird. Insbesondere sollen von außen wirkende Störungen keine Oberflächendeformationen an dem optischen Element bewirken, sondern - falls überhaupt - eine Ganzkörperbewegung.

Erfindungsgemäß wird diese Aufgabe durch die im kennzeichnenden Teil von Anspruch 1 genannten Merkmale gelöst.

Mit der erfindungsgemäßen Ausgestaltung lässt sich bei relativ kompakter Bauweise ein steifer Aufbau mit daraus resultierenden hohen Eigenfrequenzen erreichen. Darüber hinaus lässt sich die Lagerung mit wenigen Bauteilen bewerkstelligen, wobei im Bedarfsfalle auch ein monolithisches Design möglich ist.

Im allgemeinen werden drei über den Umfang verteilt angeordnete Lagereinrichtungen ausreichend sein.

Erfindungsgemäß weisen die drei Lagereinrichtungen jeweils zwei parallel zur z-Richtung (optische Achse) auf Abstand voneinander angeordnete in tangentialer Richtung verlaufende Biegeglieder mit einem dazwischen angeordneten Zwischenglied auf.

Jede Lagereinrichtung besitzt auf diese Weise z.B. zwei auf Abstand voneinander angeordnete in tangentialer Richtung zu dem optischen Element verlaufende Blattfedern und eine in radialer Richtung verlaufende Blattfeder als Quergelenk. Das zwischen den beiden in tangentialer Richtung verlaufenden Blattfedern angeordnete Zwischenglied kann steif sein oder auch - in einer sehr vorteilhaften und nicht naheliegenden Weiterbildung der Erfindung - als Manipulatoreinrichtung ausgebildet sein. In diesem Falle kann das Zwischenglied mit einer Verstellein-richtung zur Längenänderung parallel zur z-Richtung versehen sein.

Eine mögliche Ausgestaltung hierfür liegt in einem parallelogrammartigen Aufbau bzw. einem Aufbau vergleichbar einem Scheren-Wagenheber-Prinzip. Auf diese Weise lässt sich die Länge des bzw. der über den Umfang verteilt angeordneten Zwischenglieder - mit oder ohne Übersetzung - sehr feinfühlig ändern. Werden alle Zwischenglieder der Lagereinrichtungen gleichmäßig in ihrer Länge verändert, so wird damit das optische Element in z-Richtung verschoben. Bei einzelnen Längenänderungen kann auf diese Weise das optische Element entsprechend gekippt werden.

In einer sehr vorteilhaften Weiterbildung der Erfindung kann vorgesehen sein, dass die äußere Grundstruktur, mit der das optische Element über die Lagereinrichtung verbunden ist, über Manipulatoren mit einer feststehenden Gehäusestruktur der Optik verbunden ist, wobei sich die Manipulatoren an der Gehäusestruktur abstützen.

Erfindungsgemäß wird der Spiegel isostatisch gelagert, wobei durch die Anordnung der Manipulatoren keine negative Veränderung der Eigenfrequenz erreicht wird. Dies bewirkt ihre Wirkungsweise über die äußere Grundstruktur. In die äußere Grundstruktur werden die Momente und Kräfte der Manipulatoren eingeleitet, wodurch sie keine Auswirkungen auf das optische Element haben. Praktisch dient die im allgemeinen sehr steif ausgebildete Grundstruktur zur Entkoppelung der Rückstellkräfte der Manipulatoren.

Um eine Ausrichtung bzw. Verstellung des optischen Elementes in axialer Richtung bzw. in Richtung der optischen Achse (z-Achse) zu erreichen, kann man drei gleichmäßig über den Umfang verteilt angeordnete Manipulatoren an der Gehäusestruktur anordnen. Werden die Manipulatoren einzeln betätigt, erreicht man Kippungen um die z-Achse bzw. optische Achse. Werden alle drei Manipulatoren in gleicher Weise betätigt, ergibt sich eine Verschiebung des optischen Elementes in z-Richtung.

Die Manipulatoren stützen sich an einer feststehenden Gehäusestruktur der Optik ab, die gleichzeitig als Interface-Struktur, z.B. in Ringform, dienen kann.

In einer weiteren vorteilhaften Ausgestaltung der Erfindung kann vorgesehen sein, daß zur Bestimmung der Position des optischen Elementes in der Optik an der Gehäusestruktur Sensoren angeordnet sind, die mit an dem optischen Element angeordneten Gegenglieder zusammenarbeiten.

Durch diese Ausgestaltung läßt sich das optische Element in einem Objektiv definiert verstellen bzw. justieren. Hierzu wird die Ist-Position durch die Sensoren erfaßt, wonach eine Soll-Position eingestellt wird.

Durch die optionalen Sensoren, welche z.B. drei über den Umfang verteilt angeordnete berührungslose Abstandsmeßsensoren sein können, erfolgt eine direkte und damit genauere Messung, anstelle einer Messung über den Stellweg der Manipulatoren.

Als Sensoren, wie z.B. berührungslose Abstandsmeßsensoren, können die verschiedensten Sensoren verwendet werden. Hier sind beispielsweise kapazitive Sensoren oder auch ein Abstandsinterferometer möglich, die auf Gegenflächen des optischen Elements wirken. Die Gegenflächen können z.B. hierzu auf das optische Element in einem optisch nicht wirksamen Bereich aufgedampft sein.

Vorteilhafte Weiterbildungen und Ausgestaltungen der Erfindung ergeben sich aus den übrigen Unteransprüchen und aus den nachfolgend anhand der Zeichnung prinzipmäßig dargestellten Ausführungsbeispielen.

Es zeigt:
- Figur 1: eine perspektivische Darstellung der erfindungsgemäßen Vorrichtung zur Lagerung eines optischen Elementes,
- Figur 2: eine Lagereinrichtung in perspektivischer und vergrößerter Darstellung,
- Figur 3: eine Seitenansicht der Lagereinrichtung aus Pfeilrichtung A in der Figur 1,
- Figur 4: eine Lagereinrichtung in perspektivischer und vergrößerter Darstellung in einer anderen Ausführungsform,
- Figur 5: eine Prinzipdarstellung einer Lagereinrichtung in einer dritten Ausführungsform,
- Figur 6: eine perspektivische Ansicht des optischen Elementes mit der Lagereinrichtung und mit Manipulatoren (ohne feststehende Gehäusestruktur) von oben,
- Figur 7: eine perspektivische Ansicht der erfindungsgemäßen Vorrichtung nach der Figur 6 von unten, und
- Figur 8: einen Schnitt durch die Vorrichtung nach den Figuren 6 und 7 mit einer feststehenden Gehäusestruktur zur Abstützung der Manipulatoren und mit einer Sensoreinrichtung.

Ein optisches Element, z.B. ein Spiegel 1 ist über drei gleichmäßig über den Umfang verteilt angeordnete Lagereinrichtungen 2 mit einer äußeren Grundstruktur 3 verbunden. Die Grundstruktur 3 kann Teil einer Optik, z.B. eines Projektionsobjektives in der Halbleiter-Lithographie sein. Die dargestellte dreieckige Form der Grundstruktur ist lediglich beispielsweise anzusehen. Im Bedarfsfalle sind hier auch andere Formen, wie z.B. eine Kreisform möglich.

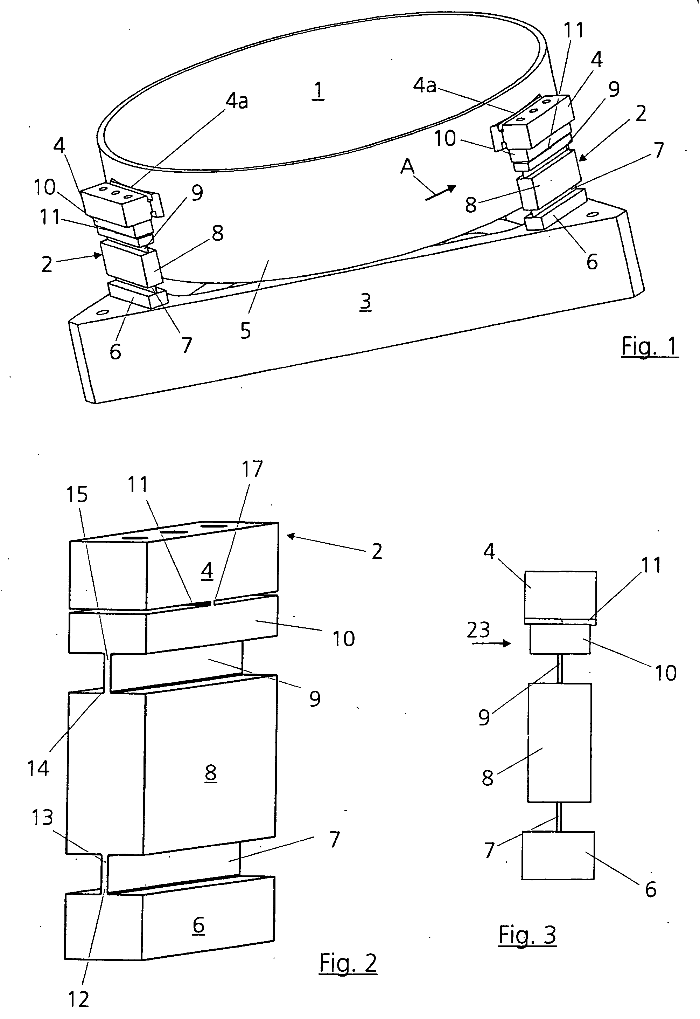

Die Lagereinrichtungen 2 sind so aufgebaut, daß sie sehr stark deformationsentkoppelt sind und dadurch keine von außen über die Grundstruktur 3 einwirkende Störungen auf das optische Element 1 weitergeben. Die Grundstruktur ist sehr steif ausgeführt (vorteilhaft ist Keramik), um die von außen kommenden Kräfte möglichst gut von den Lagerelementen und dem Spiegel zu entkoppeln. Auf diese Weise wird eine zweifache Deformationsentkoppelung erreicht. In den Figuren 2 bis 3 ist in vergrößerter Darstellung eine erste Ausführungsform einer Lagereinrichtung 2 dargestellt. Wie ersichtlich, ist die Lagereinrichtung monolithisch bzw. einstückig ausgebildet mit Festkörpergelenken zwischen den einzelnen beweglich Teilen. Sie weist ein oberes Befestigungsteil 4 auf, mit welchem die Lagereinrichtung 2 über eine Anlenkstelle 4a mit einer Fassung 5 des optischen Elementes 1 verbunden ist. Gegebenenfalls kann das Befestigungsteil 4 auch direkt mit dem optischen Element 1 verbunden sein. Auf der Unterseite bzw. auf der von der Anlenkstelle 4a abgewandten Seite ist die Lagereinrichtung 2 über ein Verbindungsteil 6 mit der Grundstruktur 3 verbunden. Mit den Verbindungsteil 6 ist ein erstes Biegegelenk 7 in Form einer Blattfeder 7 verbunden, welches tangential zur Fassung 5 bzw. dem optischen Element 1 angeordnet ist. Auf der von dem Verbindungsteil 6 abgewandten Seite ist die Blattfeder 7 mit einem steifen Zwischenglied 8 als Ausknickschutz verbunden, welches wiederum auf der von der Blattfeder 7 abgewandten Seite mit einem weiteren Biegeglied 9, ebenfalls in Form einer Blattfeder, verbunden ist. Die Blattfeder 9 erstreckt sich ebenfalls mit ihrer Längsachse tangential zu der Fassung 5 bzw. dem optischen Element 1. Die Blattfeder 9 ist auf der von dem Zwischenglied 8 abgewandten Seite mit einer Übergangsplatte 10 verbunden. Die Übergangsplatte 10 ist über ein in radialer Richtung - bezogen auf das optische Element - verlaufendes Biegeglied 11 als Quergelenk mit dem Befestigungsteil 4 verbunden.

Wie ersichtlich, ist damit die Blattfeder 7 über ein Festkörpergelenk 12 mit dem Verbindungsteil 6 und über ein Festkörpergelenk 13 mit dem Zwischenglied 8 verbunden. In gleicher Weise ist die Blattfeder 9 über ein Festkörpergelenk 14 mit dem Zwischenglied 8 und über ein Festkörpergelenk 15 mit der Übergangsplatte 10 verbunden. Das Biegeglied 11 wirkt aufgrund seiner geringen axialen Erstreckung insgesamt wie ein Festkörpergelenk 17. Selbstverständlich ist im Rahmen der Erfindung auch hier eine größere axiale Erstreckung möglich. Gleiches gilt umgekehrt für die beiden Blattfedern 7 und 9.

Im Bedarfsfalle sind die Lagereinrichtungen 2 sowohl einzeln als auch gemeinsam durch nicht näher dargestellte Manipulatoren axial verschiebbar, wobei dann die Verschiebung - entsprechend der Angriffsrichtung - über die darauf ansprechenden Blattfedern 7, 9 oder dem Biegeglied 11 bzw. die Festkörpergelenke auf das optische Element 1 weitergegeben wird. Mit dieser Ausgestaltung stellt praktisch jede Lagereinrichtung 2 eine kardanische Aufhängung für das Element 1 dar. Aufgrund der Festkörpergelenke ist jedoch eine ausreichende Steifigkeit gegen Eigenfrequenzen gegeben.

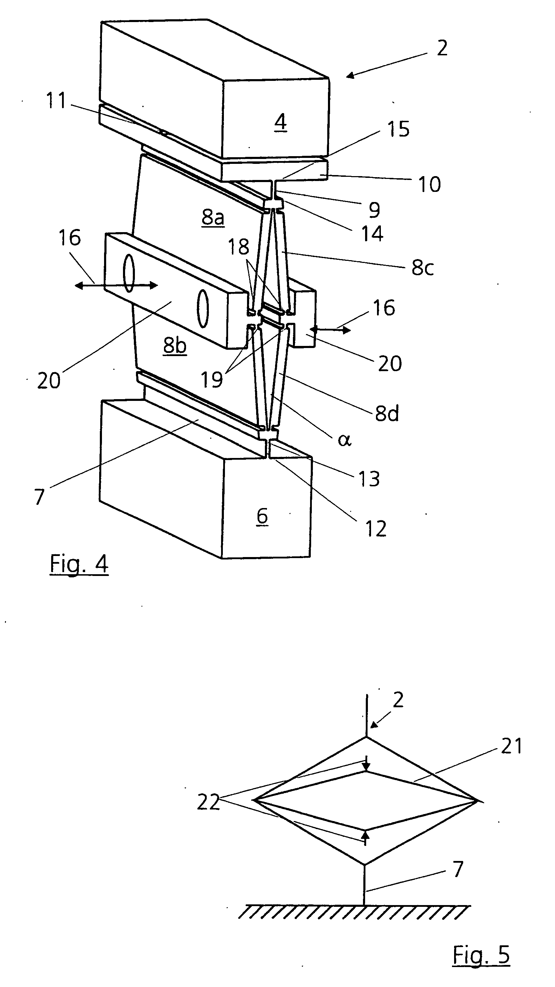

Die Figur 4 zeigt eine Ausgestaltung einer Lagereinrichtung 2 in einer anderen Ausgestaltung. Grundsätzlich ist der Aufbau identisch mit der Lagereinrichtung nach den Figuren 1 bis 3, weshalb für die gleichen Teile auch die gleichen Bezugszeichen beibehalten worden sind. Unterschiedlich ist lediglich, daß das steife Zwischenglied 8 durch ein Parallelogramm mit den vier Seiten 8a, 8b, 8c und 8d ersetzt worden ist. Die auf einer Seite sich befindenden Parallelogrammseiten 8a und 8b sind durch Festkörpergelenke 18 und 19 miteinander verbunden. Gleiches gilt für die Parallelogrammseiten 8c und 8d, die sich auf der anderen Seite befinden. Jeweils zwischen den Festkörpergelenken 18 und 19 befindet sich ein Aktuatorglied 20. Werden durch eine nicht näher dargestellte Betätigungseinrichtung Kräfte in Pfeilrichtung 16 auf die Aktuatorglieder 20 ausgeübt, so verändert sich der Öffnungswinkel α des Parallelogrammes. Je nach Öffnungswinkel α ergibt sich eine entsprechende Über- oder Untersetzung des Verschiebeweges, welcher sich bezüglich des optischen Elementes 1 in einer Höhenänderung in z-Richtung (optische Achse) auswirkt. Bei kleinem Öffnungswinkel α wird eine entsprechend starke Untersetzung erreicht, bei einem Öffnungswinkel von 45° ist das Übersetzungsverhältnis 1 : 1 und bei größerem Öffnungswinkel α das Übersetzungsverhältnis entsprechend größer.

Da man im allgemeinen eine sehr feinfühlige Verstellung in z-Richtung erreichen möchte, kann es von Vorteil sein, wenn man eine nochmalige Untersetzung durch ein zweites Parallelogramm 21 mit entsprechend vier Parallelogrammseiten vornimmt, welches sich im Inneren des Parallelogrammes mit den Seiten 8a bis 8d befindet (siehe Figur 5). Verschiebekräfte gemäß Pfeilrichtung 22 auf das innere Parallelogramm 21 wirken sich entsprechend untersetzt auf das äußere Parallelogramm mit den Seiten 8a bis 8d aus. Dabei wirken die Verschiebekräfte 22 jeweils seitlich zwischen den Parallelogrammseiten 8a und 8b bzw. 8c und 8d und verändern dadurch den Öffnungswinkel α sehr feinfühlig.

Durch das zweite Parallelogramm kann die Justagebewegung linearisiert werden und zwar durch Optimieren der Öffnungswinkel α und β.

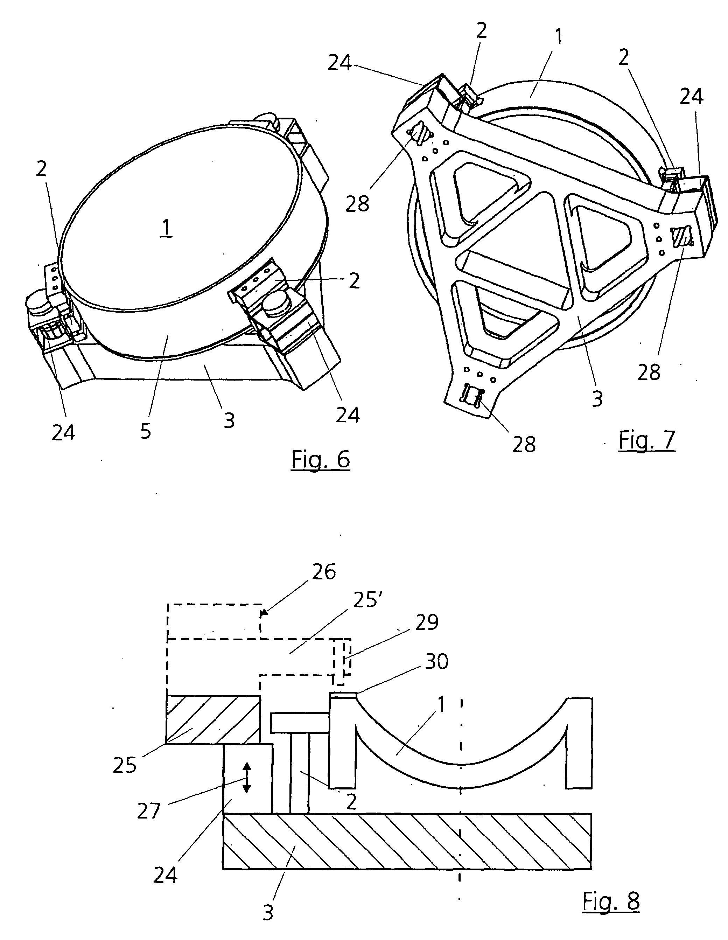

In den Figuren 6 bis 8 ist eine Weiterbildung der Erfindung dargestellt, wobei das optische Element 1 durch drei gleichmäßig über den Umfang verteilt angeordnete Manipulatoren 24 in axialer Richtung verstellbar ist. Zusätzlich ist in der Figur 8 eine Sensoreinrichtung dargestellt, mit der die jeweilige Position des optischen Elementes 1 exakt überprüfbar ist.

Wie aus der Figur 8 weiterhin ersichtlich ist, stützen sich die Manipulatoren 24 auf einer feststehenden Gehäusestruktur 25 der Optik, z.B. eines nur teilweise dargestellten Objektives 26, ab. Wie ersichtlich, wirken die sich auf der Gehäusestruktur 25 abstützenden Manipulatoren 24 über die Grundstruktur 3 auf die Lagereinrichtung 2 (in der Figur 8 zur Vereinfachung nur prinzipmäßig dargestellt) und damit auf das optische Element 1. Da die Grundstruktur 3 sich sehr steif ausbilden läßt, z.B. aus keramischem Material, kann sie zur Entkoppelung der Rückstellkräfte der Manipulatoren 24 dienen.

Die Manipulatoren 24 sind in den Figuren 6 bis 8 nur prinzipmäßig angedeutet, da hierfür die verschiedensten Motoren bzw. Verstelleinrichtungen, die axiale Längenänderungen gemäß Pfeil 27 erzeugen, beliebig einsetzbar sind. So sind z.B. piezokeramische Aktuatoren, die bei einer Spannungsbeaufschlagung Längenänderungen erfahren, möglich. Die Manipulatoren 24, die auf einer Seite mit der Gehäusestruktur 25 und auf der anderen Seite mit der Grundstruktur 3 verbunden sind, können z.B. jeweils durch eine Öffnung 28 im Bereich der Ecken der dreieckförmigen Grundstruktur 3 von unten her eingesetzt werden (siehe Figur 7).

Um die Ist-Position des optischen Elementes 1 zu erfassen und dann entsprechend eine Soll-Position möglichst exakt einstellen zu können nach einer entsprechenden Betätigung der Manipulatoren 24, sind an der feststehenden Gehäusestruktur 25 z.B. drei über den Umfang verteilt angeordnete Sensoren 29 vorgesehen. Hierzu kann z.B. die Gehäusestruktur 25, welche auch als Interfacering dienen kann, mit einer nach innen gerichteten Erweiterung 25' (nur gestrichelt dargestellt) versehen sein, in oder an der dann die Sensoren 29 gelagert sind.

Die Sensoren 29 arbeiten mit Gegenglieder 30 zusammen, die an dem optischen Element 1 außerhalb des optisch wirksamen Bereiches entsprechend gegenüberliegend angeordnet sind.

Als Sensoreinrichtungen lassen sich z.B. kapazitive Sensoren oder auch Abstandsinterferometer verwenden, die berührungslos agieren. Die Gegenglieder 30 an dem optischen Element 1 können dabei als leitende Gegenflächen auf das optische Element 1 aufgedampft sein.

## Patentansprüche

1. Vorrichtung zur Lagerung eines optischen Elementes (1) in einer Optik, insbesondere eines Spiegels oder einer Linse, in einer Projektionsbelichtungsanlage, insbesondere einem Projektionsobjektiv in der Halbleiter-Lithographie, mit wenigstens drei am Umfang des optischen Elementes (1) angeordneten Anlenkstellen (4a), an denen jeweils eine Lagereinrichtung (2) mit wenigstens einem blattfederartigen Biegeglied, welches auf der von der Anlenkstelle (4a) abgewandten Seite mit einer äußeren Grundstruktur (3) verbunden ist, **dadurch gekennzeichnet, dass** die Lagereinrichtung (2) zwei parallel zur optischen Achse auf Abstand voneinander angeordnete in tangentialer Richtung zu dem optischen Element (1) verlaufende blattfederartige Biegeglieder (7,9) mit einem dazwischen angeordneten Zwischenglied (8) und wenigstens ein in radialer Richtung zu dem optischen Element angeordnetes blattfederartiges Bindeglied (11) aufweist.

2. Vorrichtung nach Anspruch 1, **dadurch gekennzeichnet, dass** die Biegeglieder (7,9,11) jeweils über Festkörpergelenke (12,13,14,15,17) mit den benachbart liegenden Teilen, wie Anlenkstelle (4a), Verbindungsteile (6), Zwischenglieder (8), Übergangsplatte (10), verbunden sind.

3. Vorrichtung nach einem der Ansprüche 1, **dadurch gekennzeichnet, dass** das Zwischenglied (8) mit einer Verstelleinrichtung (16) zur Längenänderung des Zwischengliedes (8) parallel zur optischen Achse versehen ist.

4. Vorrichtung nach Anspruch 3, **dadurch gekennzeichnet, dass** die Verstelleinrichtung wenigstens eine parallelogrammartige Form (8a,8b,8c,8d) aufweist, deren Öffnungswinkel (α) durch die Verstelleinrichtung (16) verstellbar ist.

5. Vorrichtung nach Anspruch 4, **dadurch gekennzeichnet, dass** die parallelogrammartigen Seiten (8a,8b,8c,8d) jeweils über Festkörpergelenke (12,13,14,15,17) miteinander verbunden sind.

6. Vorrichtung nach Anspruch 5, **dadurch gekennzeichnet, dass** jeweils zwischen den auf einer Seite sich befindenden Parallelogrammseiten (8a,8b bzw. 8c,8d) ein Aktuatorglied (20) angreift.

7. Vorrichtung nach Anspruch 4, **dadurch gekennzeichnet, dass** im Inneren des Parallelogrammes (8a,8b,8c,8d) ein weiteres Parallelogramm (21) angeordnet ist, das mit einer Verstelleinrichtung (22) versehen ist, welche jeweils zwischen den Parallelogrammseiten (8a,8b bzw. 8c,8d) auf jeder Seite zur Änderung des Öffnungswinkels (α) angreift.

8. Vorrichtung nach einem der Ansprüche 1 bis 7, **dadurch gekennzeichnet, dass** die Verstelleinrichtungen (16,20) der über den Umfang verteilt angeordneten Lagereinrichtungen (2) jeweils einzeln oder gemeinsam verstellbar sind.

9. Vorrichtung nach einem der Ansprüche 1 bis 8, **dadurch gekennzeichnet, dass** drei über den Umfang verteilt angeordnete Lagereinrichtungen (2) vorgesehen sind.

10. Vorrichtung nach einem der Ansprüche 1 bis 9, **dadurch gekennzeichnet, dass** die Lagereinrichtungen (2) monolithisch ausgebildet sind.

11. Vorrichtung nach einem der Ansprüche 1 bis 10, **dadurch gekennzeichnet, dass** die Grundstruktur (3), auf der sich die Lagereinrichtung (2) abstützt, als steife Struktur, insbesondere Keramikstruktur, ausgebildet ist.

12. Vorrichtung nach Anspruch 1, **dadurch gekennzeichnet, dass** die äußere Grundstruktur (3), mit der das optische Element (1) über die Lagereinrichtung (2) verbunden ist, über Manipulatoren (24) mit einer feststehenden Gehäusestruktur (25) der Optik (26) verbunden ist, wobei sich die Manipulatoren (24) an der Gehäusestruktur (25) abstützen.

13. Vorrichtung nach Anspruch 12, **dadurch gekennzeichnet, dass** die Manipulatoren (24) für eine Verstellung der Grundstruktur (3) in axialer Richtung vorgesehen sind.

14. Vorrichtung nach Anspruch 13, **dadurch gekennzeichnet, dass** drei gleichmäßig über den Umfang verteilt angeordnete Manipulatoren (24) an der Gehäusestruktur (25) angeordnet sind.

15. Vorrichtung nach Anspruch 12, **dadurch gekennzeichnet, dass** zur Bestimmung der Position des optischen Elementes (1) in der Optik (26) an der Gehäusestruktur (25) Sensoren (29) angeordnet sind, die mit an dem optischen Element (1) angeordneten Gegenglieder (30) zusammenarbeiten.

16. Vorrichtung nach Anspruch 15, **dadurch gekennzeichnet, dass** die Sensoren (29) als über den Umfang der Gehäusestruktur (25) verteilt angeordnete berührungslose Abstandsmeßsensoren oder als Abstandsinterferometer ausgebildet sind.

17. Vorrichtung nach Anspruch 15 und 16, **dadurch gekennzeichnet, dass** die Gegenglieder (30) als Gegenflächen ausgebildet sind, die außerhalb des optisch wirksamen Bereiches an dem optischen Element (1) angeordnet sind.

18. Vorrichtung nach Anspruch 17, **dadurch gekennzeichnet, dass** bei kapazitiven Sensoren (29) oder bei Abstandsinterferometern (29) die Gegenflächen (30) auf das optische Element (1) aufgedampft sind.

## Claims

1. Device for mounting an optical element (1), particularly a mirror or a lens, in an optical system of a projection exposure apparatus, in particular a projection objective in semiconductor lithography, having at least three guide locations (4a) arranged on the circumference of the optical element (1), and on each of these a mounting unit (2) with at least one leafspring-like flexion member, which is connected on the other side from the guide location (4a) to an outer base structure (3), **characterised in that** the mounting unit (2) has two leafspring-like flexion members (7, 9) arranged parallel to the optical axis at a distance from each other and extending in a direction tangential to the optical element (1), with an intermediate member (8) arranged between them, and at least one leafspring-like connecting member (11) arranged in a direction radial to the optical element.

2. Device according to Claim 1, **characterised in that** the flexion members (7, 9, 11) are respectively connected via solid-state articulations (12, 13, 14, 15, 17) to the parts lying next to them, such as a guide location (4a), connecting parts (6), an intermediate member (8), a junction plate (10).

3. Device according to Claim 1, **characterised in that** the intermediate member (8) is provided with an adjustment unit (16) for changing the length of the intermediate member (8) parallel to the optical axis.

4. Device according to Claim 3, **characterised in that** the adjustment unit has at least one parallelogram-like shape (8a, 8b, 8c, 8d) whose aperture angle (α) can be adjusted by the adjustment unit (16).

5. Device according to Claim 4, **characterised in that** the parallelogram-like sides (8a, 8b, 8c, 8d) are respectively connected together via solid-state articulations (12, 13, 14, 15, 17).

6. Device according to Claim 5, **characterised in that** an actuator member (20) respectively engages between the parallelogram sides (8a, 8b and 8c, 8d) located on one side.

7. Device according to Claim 4, **characterised in that** a further parallelogram (21) is arranged inside the parallelogram (8a, 8b, 8c, 8d) and is provided with an adjustment unit (22) which respectively engages between the parallelogram sides (8a, 8b and 8c, 8d) on each side in order to change the aperture angle (α).

8. Device according to one of Claims 1 to 7, **characterised in that** the adjustment units (16, 20) of the mounting units (2) arranged distributed over the circumference can respectively be adjusted individually or together.

9. Device according to one of Claims 1 to 8, **characterised in that** three mounting units (2) are provided, arranged distributed over the circumference.

10. Device according to one of Claims 1 to 9, **characterised in that** the mounting units (2) are monolithically designed.

11. Device according to one of Claims 1 to 10, **characterised in that** the base structure (3), on which the mounting unit (2) is supported, is designed as a rigid structure, in particular a ceramic structure.

12. Device according to Claim 1, **characterised in that** the outer base unit (3), to which the optical element (1) is connected via the mounting unit (2), is connected via manipulators (24) to a static housing structure (25) of the optical system (26), the manipulators (24) being supported on the housing structure (25).

13. Device according to Claim 12, **characterised in that** the manipulators (24) are intended for adjustment of the base structure (3) in the axial direction.

14. Device according to Claim 13, **characterised in that** three manipulators (24), distributed uniformly over the circumference, are arranged on the housing structure (25).

15. Device according to Claim 12, **characterised in that** sensors (29), which interact with backing members (30) arranged on the optical element (1), are arranged on the housing structure (25) in order to determine the position of the optical element (1) in the optical system (26).

16. Device according to Claim 15, **characterised in that** the sensors (29) are designed as contactless distance measurement sensors arranged distributed over the circumference of the housing structure (25), or as distance interferometers.

17. Device according to Claim 15 and 16, **characterised in that** the backing members (30) are designed as backing surfaces, which are arranged outside the optically active region on the optical element (1).

18. Device according to Claim 17, **characterised in that** in the case of capacitive sensors (29) or in the case of distance interferometers (29), the backing surfaces (30) are vapour deposited on the optical element (1).

## Revendications

1. Dispositif pour le montage d'un élément optique (1) dans une optique, en particulier d'un miroir ou d'une lentille dans une installation d'éclairage par projection, en particulier d'un objectif de projection utilisé dans la lithographie des semi-conducteurs, comprenant au moins trois zones d'articulation (4a) disposées à la périphérie de l'élément optique (1), pour chacune desquelles est prévu un dispositif de support (2) possédant au moins un élément de flexion du type ressort à lame qui est relié à une structure de base extérieure (3) sur le côté éloigné de la zone d'articulation (4a), **caractérisé en ce que** le dispositif de support (2) comprend deux éléments de flexion (7, 9) du type ressort à lame, disposés parallèlement à l'axe optique, à distance l'un de l'autre, dans une direction tangentielle à l'élément optique (1), avec un élément intermédiaire (8) disposé entre eux et au moins un élément de liaison (11) du type ressort à lame, disposé dans une direction radiale par rapport à l'élément optique.

2. Dispositif selon la revendication 1, **caractérisé en ce que** les éléments de flexion (7, 9, 11) sont reliés aux parties proches telles que la zone d'articulation (4a), une partie de liaison (6), l'élément intermédiaire (8), la plaque de raccordement (10), à chaque fois par des articulations en corps solide (12, 13, 14, 15, 17).

3. Dispositif selon la revendication 1, **caractérisé en ce que** l'élément intermédiaire (8) est pourvu d'un dispositif de réglage (16) destiné à modifier la longueur de l'élément intermédiaire (8) parallèlement à l'axe optique.

4. Dispositif selon la revendication 3, **caractérisé en ce que** le dispositif de réglage présente au moins une forme de parallélogramme (8a, 8b, 8c, 8d) dont l'angle d'ouverture (α) peut être réglé par le dispositif de réglage (16).

5. Dispositif selon la revendication 4, **caractérisé en ce que** les côtés en forme de parallélogramme (8a, 8b, 8c, 8d) sont reliés entre eux par des articulations en corps solide (12, 13, 14, 15, 17).

6. Dispositif selon la revendication 5, **caractérisé en ce qu'**un élément actionneur (20) agit entre les côtés du parallélogramme (8a, 8b, ou 8c, 8d) qui se trouvent sur un même côté.

7. Dispositif selon la revendication 4, **caractérisé en ce qu'**à l'intérieur du parallélogramme (8a, 8b, 8c, 8d), est disposé un autre parallélogramme (21) qui est pourvu d'un dispositif de réglage (22) qui agit sur chaque côté entre les côtés (8a, 8b ou 8c, 8d) du parallélogramme pour faire varier l'angle d'ouverture (α).

8. Dispositif selon l'une des revendications 1 à 7, **caractérisé en ce que** les dispositifs de réglage (16, 20) des dispositifs de support (2) répartis sur la périphérie sont réglables individuellement ou en commun.

9. Dispositif selon l'une des revendications 1 à 8, **caractérisé en ce qu'**il est prévu trois dispositifs de support (2) répartis sur la périphérie.

10. Dispositif selon l'une des revendications 1 à 9, **caractérisé en ce que** les dispositifs de support (2) sont de constitution monolithique.

11. Dispositif selon l'une des revendications 1 à 10, **caractérisé en ce que** la structure de base (3) sur laquelle le dispositif de support (2) prend appui est constituée par une structure rigide, en particulier par une structure en céramique.

12. Dispositif selon la revendication 1, **caractérisé en ce que** la structure de base extérieure (3), à laquelle l'élément optique (1) est relié par l'intermédiaire du dispositif de support (2), est reliée à une structure de corps fixe (25) de l'optique (26) par l'intermédiaire de manipulateurs (24), les manipulateurs (24) prenant appui sur la structure de corps (25).

13. Dispositif selon la revendication 12, **caractérisé en ce que** les manipulateurs (24) sont prévus pour régler la structure de base (3) dans la direction axiale.

14. Dispositif selon la revendication 13, **caractérisé en ce que** trois manipulateurs (24) répartis uniformément sur la périphérie sont attachés à la structure de corps (25).

15. Dispositif selon la revendication 12, **caractérisé en ce que**, pour déterminer la position de l'élément optique (1) dans l'optique (26), il est prévu des capteurs (29) disposés sur la structure de corps (25), qui coopèrent avec des éléments conjugués (30) attachés à l'élément optique (1).

16. Dispositif selon la revendication 15, **caractérisé en ce que** les capteurs (29) sont constitués par des capteurs télémétriques sans contact matériel répartis sur la périphérie de la structure de corps (25), ou par des interféromètres télémétriques.

17. Dispositif selon les revendications 15 et 16, **caractérisé en ce que** les éléments conjugués (30) sont constitués par des surfaces conjuguées qui sont fixées à l'élément optique (1) à l'extérieur de la région optiquement effective.

18. Dispositif selon la revendication 17, **caractérisé en ce que**, dans le cas de capteurs capacitifs (29) ou dans le cas d'interféromètres télémétriques (29), les surfaces conjuguées (30) sont vaporisées sur l'élément optique (1).
